# EUROPEAN PATENT SPECIFICATION

(11) **EP 1 379 333 B1**
(45) Date of publication and mention of the grant of the patent: **06.06.2007**
(21) Application number: 02727307.7
(22) Date of filing: 19.04.2002
(51) Int. Cl.: B03B 9/06, B29B 17/02, B03B 5/28, B03B 5/04

(54) **A METHOD AND AN APPARATUS FOR SEPARATING WASTE MATERIAL**
VERFAHREN UND VORRICHTUNG ZUR TRENNUNG VON ABFALLMATERIALIEN
PROCEDE ET DISPOSITIF DE SEPARATION D'UN DECHET

(30) Priority: 20.04.2001 DK 200100633
(43) Date of publication of application: 14.01.2004
(73) Proprietor: Rastof og Genanvendelse Selskabet af 1990 A/S, 2300 Copenhagen S (DK)
(72) Inventor: RASMUSSEN, Erik, DK-2820 Gentofte (DK)
(74) Representative: Zeuthen-Aagaard, Henrik
(86) International application number: PCT/DK2002/000257
(87) International publication number: WO 2002/085523

(56) References cited:
- EP-A- 0 431 582
- EP-A- 0 487 123
- EP-A- 0 623 390
- DE-A- 4 130 645
- DE-A- 4 132 938
- DE-A- 4 228 504
- PATENT ABSTRACTS OF JAPAN vol. 1999, no. 13, 30 November 1999 (1999-11-30) & JP 11 207312 A (FUJIKAWA KINZOKU KK;AKAZAWA KENICHI), 3 August 1999 (1999-08-03) cited in the application

## Description

The invention relates to a method and an apparatus for separating waste material comprising plastic material and metallic material.

In recent years there has been a demand for reducing the amount of waste which has to be placed either in a depot or destroyed e.g. by incinerating the waste material, as both depositing and incineration of waste are critical with regard to the environment.

Consequently there is a tendency towards recycling of materials. Recycling normally requires that the different materials are sorted into substantially uniform fractions. As many modern products contain different types of plastic material, which may be combined with metallic material, e.g. for electronics, cables and building products, it is necessary to separate those materials in order to recycle the materials when the products of which they are a part are fit for scrap.

A number of methods for separating waste material including plastic material and metallic material are already known.

European patent application no. 0 431 582 Al discloses a process for separating and recovering lead, rubber and copper wires from waste cables. The separation and recovery of lead, rubber and copper are obtained through washing, gravimetric separation, screening operations and methods for flattening lead grains. The process provides no possibility of separating plastic material into a light fraction e.g. polyethylene and a heavy fraction e.g. PVC.

Japanese patent application no. 11207312 A2 discloses a method for recovering metal piece, polyvinyl chloride-rubber crushed material and iron powder from automobile waste molding. The dust depositing on the charged iron powder-mixed PVC-rubber crushed material and iron-powder material is separated and the iron-powder material from the iron powder-mixed PVC-rubber crushed material by a vibrating screen, and the processed PVC-rubber crushed material and iron-powder material are produced. A water stream classifier such as the gravity separator is composed of a sorting table having an inclined separation plate, a water feed provided above the separation plate and a dust collecting part. The dust depositing on the reprocessed PVC-rubber crushed material and iron-powder material is separated, and the reprocessed PVC-rubber crushed material and the iron-powder material are gravity-separated in the stream. The disclosed method does not provide a possibility to separate PVC-rubbers from other kinds of plastics.

DE 42 28 504 A discloses a method of sorting waste mixtures of plastics, composites and metals including in succession at least one step of shredding and at least one step of magnetic separation, separation of glass, stones, non-iron metals by a simple gravimetric method, mixing the remaining material with a process-liquid using high shear stirring, sucking off present porous plastic materials (foamed plastics) with air flow from the layer of floating materials, at least one step of sink/float separation in a centrifuge, and at least one step of separation of the sink fraction on a shaking table. The use of a centrifuge is per se an expensive solution. Furthermore the sink-float process is carried out with different separation liquids with different densities such as 1.0 g/cm³, 1.1 g/cm³ and 1.2 g/cm³, respectively. Such accurate densities are difficult to maintain within the desired limits as contact between the different liquids and the waste particles changes the density. Thus a complicated continuous adjustment of the densities is needed. Finally, a high shear is required in the mixing step to ensure sufficient wetting of the waste materials with the process-liquid. Thus the method is complicated and energy-consuming. DE 42 28 504 A does not propose a simple sink-float process based on the force of the gravitational field of the earth only (g ~ 1) and is silent on surface tension values.

Separation on a shaking table is well known in the art, see for example EP 487 123 A, DE 41 32 938 A and EP 623 390 A.

DE 41 30 645 A discloses a stepwise sink-float separation wherein the particulate plastic materials in each step are first mixed with process-liquid using a stirrer where after the stirrer is switched off leaving the materials at rest to be separated by floating or sinking, respectively. Such separation requires a stirring period and a rest period, which is very time-consuming and cannot be carried out continuously. Furthermore the disclosed separation is based on process-liquids with different densities such as 1.0 g/cm³, 1.1 g/cm³ and 1.5 g/cm³, respectively. Such accurate densities are difficult to maintain within the desired limits as contact between the different liquids and the waste particles change the density. Thus a complicated continuous adjustment of the densities is needed.

US 5 653 867 discloses a special method for the separation of two specific plastic materials, namely acrylonitrile butadiene styrene (ABS) and high impact polystyrene (HIPS) having specific gravities Close to each other in the range of 1.055 to 1.125. This separation requires a process-liquid prepared of acetic or hydrochloric acid, sodium or calcium chloride, surfactants and water and having very specific features including a density of between 1.055 and 1.07 g/cm³, a surface tension between 22 and 40 dyn/cm and a pH between 1.77 and 2.05. The maintenance of such specific features requires complicated equipment and/or a skilled staff to ensure the necessary control and adjustments. This type of separation method is not suitable for the separation of larger amounts of waste materials containing a plurality of different materials,

Many of the prior art methods make it possibly to separate a large amount of metal from polymers to obtain a degree of purity of 95 % or in some instance even up to about 98 %. To obtain this relatively high degree of purity, many steps of cleaning and separating are necessary using prior art technology.

Furthermore, reusing the separated materials for most purposes requires that the separation is stable and results in highly pure material. For example, polymers with 1 % of metal cannot be used as raw materials for a lot of applications.

Due to the drawbacks of the known methods, there is a need for a method by which it is possible to separate waste material comprising plastic material and metallic material in which the material is divided into a metallic fraction and a plastic fraction and where the plastic fraction further can be divided into a light and a heavy fraction. Normally the light fraction includes lesser harmful plastic materials like polyethylene and polypropylene.

Furthermore a separation resulting in increased purity of the separated fraction is desired.

The object of the present invention is to provide a method and an apparatus for separating waste material comprising plastic material and metallic material to obtain increased purity of the separated fractions.

A further object of the present invention is to provide a method and an apparatus for separating waste material comprising plastic material and metallic material which is cost-effective and economically attractive.

A third object of the present invention is to provide a method and an apparatus for separating waste material comprising plastic material and metallic material wherein it is possible to separate the plastic material into different fractions.

A fourth object of the invention is to provide a method and an apparatus for separating plastic waste material wherein the waste material can be separated into different plastic fractions, which makes it possible to reuse the different plastic materials of the waste material.

A fifth object of the invention is to provide a method and an apparatus for separating plastic fractions from metal fractions, which makes it possible to recover and reuse the metals and to obtain plastic fractions substantially free from residual metals.

Moreover it is an object of the invention to provide a method and an apparatus which are capable of separating plastic waste into plastic fractions that can be utilised for chemicals production or energy production.

These objects and other objects as will appear from the following are obtained by the present invention as it is defined in the claims.

By using the method according to the invention an improved separation has thus been obtained, whereby the plastic fractions and metal fraction can be separated to a degree whereby the plastic fractions contain less than 0.5% by weight of residual metals, or even less than 0.1 % by weight of residual metals.

In one embodiment, also the metal fraction obtained has a high purity, wherein the plastic in the metal fraction is less than 0.5 % by weight, or even less than 0.1 % by weight.

The waste material to be treated in the method may in principle be any type of material which is no longer useful in its present form. The waste material should preferably be a mixture of different materials preferably including plastic material and metallic material.

Recycling of products containing plastic materials normally requires sorting of the material. Plastic material may comprise polyethylene (PE), polypropylene (PP), acrylnitril butadiene styrene (ABS), polyamide (PA), polycarbonate (PC), polystyrene (PS), epoxy and polyurethane (PUR), polyvinyl alcohol (PVA), polyvinyl acetate (PVAC) and polyvinyl chloride (PVC). The term plastic material also encompasses many other types of synthetic and natural polymers and any combination of those materials, which all fall within the definition of plastic material.

When different kinds of materials are used in a product, e.g. different plastic materials and metals, sorting and separating of the outworn product are necessary in order to reuse the different components constituting the product. The invention provides a method and an apparatus in which different kinds of plastic materials can be separated from each other as well as from different metal components.

In particular, the invention provides a method and an apparatus for separating polyvinyl chloride plastic from mixed waste material including plastic material and metallic material, e.g. outworn electric cables. It is well known that polyvinyl chloride is troublesome with regard to the environment.

By use of the present invention it is possible to obtain sorted or separated fractions of material which have a very high purity and are capable of being recycled into industrial processes.

The method for separating a waste material including plastic material and metallic material according to the invention comprises the steps of claim 1.

Initially the waste material is normally present in pieces of any size and with the different material types joined to each other. In order to separate the different materials from each other it is desired that the materials are treated so that the joints between the material types are broken. In step i) the waste material is granulated which in its broadest aspect means that the waste material is comminuted, cut or grinded. The better the joints between the different materials are broken, the better the final separation will be.

Using a granulator in the granulating step i) provides granulated waste material with a relatively uniform size.

Normally it is preferred that at least 80% by weight, preferably at least 90% by weight of the waste material should be granulated in step i), e.g. to have a size up to 50 mm measured by sieving.

In one embodiment, it is desired that the granulation is sufficient to provide a separation between metal-plastic joints, so that the remaining pieces of waste material comprising metal-plastic joints are less than 1 % by weight of the total amount of waste, e.g. less than 0.5 % or even 0.2% by weight of the total amount of waste material.

In one embodiment, the waste material is granulated to obtain a material size of the waste material wherein at least 70%, preferably more than 80% by weight of the granulates have an average mean size between 2-14 mm measured by sieving.

The granulated waste material is wetted with process-water in step ii) in order to improve the ability of the waste material to be separated in the following steps. The process-water may in principle be any water-based liquid such as water comprising up to 5% by weight of other liquids or dirt. Preferably the process-water is common tap-water whereto a surfactant has been added to lower the surface tension of the water to below 50 dyn/cm. The process-water may e.g. further contain other additives such as preservatives.

In one embodiment of the method according to the invention a surfactant in the form of a detergent is added to the process-water. The detergent improves the wetting and separating properties of the process-water. The detergent may e.g. be added to the process-water in an amount of 0.001-10 gram per kg waste material.

The detergent may comprise one or more surfactants selected from the group of anionic, cationic, non-ionic and amphoteric surfactants. The major purpose of the detergent is to lower the surface tension of the water.

The detergent may have any possibly pH value, but it is desired that the pH value of the process-water containing the detergent is below 10, more preferably below 9 or even more preferred below 8. Thereby, any severe corrosive effect or any corrosive effect at all on the metal fraction can be avoided.

Examples of detergents include among others **Alconox^{®}** a powdered precision cleaner, anionic detergent; **Alcojet^{®}** a low-foaming powdered detergent, non-ionic; **Detergent 8^{®}** a low-foaming phosphate-free, non-ionic, concentrated detergent; **Luminox^{®}** a low-foaming, pH neutral cleaner; **Syneronic^{tm} NCA 800 series** (e.g. 810, 830 and 850) alcohol alkoxylate surfactants; **Victawet^{®} 12** a low-foaming, non-ionic phosphate wetting agent.

The detergent may preferably be in form of a liquid or in the form of an aqueous solution.

The detergent should be added to keep the surface tension below 50 dyn/cm.

In one embodiment, the process-water should have a surface tension at 20 °C below 45 dyn/cm, such a below 40 dyn/cm or even more below 35 dyn/cm, or 30 dyn/cm. The surface tension of the process-water is kept below 50 dyn/cm, such as in the interval 25-50 dyn/cm. Additional surfactant/detergent may be added during the separation process to keep the surface tension of the process-water.

To obtain the optimal properties with regard to wetting of the process-water it is preferred that the process-water has a temperature within the range of 10-90°C.

The amount of process-water is adjusted in relation to the type and amount of waste material, as it will be described further below. The skilled person can by using ordinary optimising test find the optimal amount of process-water for a specific type and amount of waste material.

Preferably the amount of process-water in step ii) is between 1-100 litres per kg granulated waste material.

In one embodiment, the amount of process-water in step iii) is between 1-100 litres per kg heavy fraction.

In one embodiment, the amount of process-water in step iv) is between 1-100 litres per kg plastic fraction.

In order to make the method as environment-friendly as possible and to reduce cost, the overall consumption of process-water should be as low as possible and preferably within the above given ranges. Anyhow a certain amount of process-water is necessary to obtain good separating properties. As will be described below, the process-water may be reused, and the actual consumption of water can therefore be kept very low. After start-up the additionally added process-water for continuing separation of waste material may be kept as low as less than ½ litre or even less than ¼ litre of process-water per kg waste material.

In step iii) the first separation takes place. The separation is performed as a sink float process, where a light fraction of light plastic material is separated from heavy plastic material and metal material. The light floating plastic material may e.g. be polyethylene and/or polypropylene. Preferably the specific gravity of the polymer compounds of the light fraction is less than 1 g/cm³. The light fraction is removed from the upper part of the sink float unit. The heavy plastic material may e.g. be polyvinyl chloride and the metal material may e.g. be copper and/or aluminium. The heavy material sinks to the bottom part of the sink float unit and from there the heavy material is led to the sorting table.

In one embodiment, the wetting and the sink float process may be conducted in one step, wherein the wetting is conducted in a pipe leading to the sink-float process. In the wetting pipe the waste material is contacted with the process-water under turbulent circumstances e.g. provided by a mixer. In the sink float process, the wetted waste material is fed under a process-water level, so that a circular movement is made, and the sink float process is conducted using this stream for improving the separation speed.

On the shaking table in step iv) the heavy material is separated into a heavy plastic fraction and a metal fraction. The heavy plastic fraction is e.g. PVC, and preferably the specific gravity of the polymer compounds of the heavy plastic fraction is higher than 1 g/cm³. The metal fraction is e.g. copper and aluminium. Normally the shaking table also removes a minor amount of middling, which is a mixture of non-sorted plastic and metal. The middling is recycled in the process.

The PVC fraction may optionally be subjected to a further sink float process in order to remove minor residues of light plastic.

In one embodiment of the method, the waste material is subjected to a dividing and screening process before step i). The dividing and screening process is defined as an initial primary sorting, and the step may in principle comprise any type of sorting method e.g. sorting by hand or washing by water. The dividing and screening process may e.g. be a washing step, which serves primarily to remove sand and dirt and the like from the waste material. Additionally the material may also be subjected to a washing process to remove sand, dirt and unwanted pollution of the waste material.

If the waste material comprises magnetic material like iron, it may be desired to separate this part of the metal into a separate fraction. The waste material may then be subjected to magnetic separation, which may e.g. be made prior to step ii).

Furthermore, to make the method as environment-friendly as possible and to reduce cost the process-water may preferably be collected from one, more or ideally all of the steps iii) - v) and re-circulated to step ii), preferably after being filtrated. As some of the surfactant/detergent will be consumed during the separation process, further surfactant/detergent may be added to the re-circulated process-water. The consumed amount of surfactant/detergent depends mainly on the amount and type of waste to be separated.

Moreover, it is preferred that the time for mixing and wetting of the granulated waste material and the process-water in step ii) is 10 to 1000 seconds.

In a preferred embodiment of the method according to the invention, the light fraction of step iii) comprises polyethylene and/or polypropylene.

Furthermore, the metallic fraction of step iv) preferably comprises copper and/or aluminium.

Moreover, the plastic fraction of step iv) preferably comprises polyvinyl chloride (PVC).

In a preferred embodiment of the method according to the invention, the frequency of the strokes of the shaking table in step iv) is 1-10 strokes per second.

The invention also relates to an apparatus for separating waste material including plastic material and metallic material, which apparatus comprises the features of claim 1.

In a preferred embodiment of the apparatus according to the invention, the apparatus further comprises a dividing and screening unit to divide and screen the waste material, and preferably the dividing and screening unit is placed before the shredder and/or granulator a). The screening and dividing unit will ensure that material of suitable size is led to the granulator. The screening device may preferably be a shredder.

Preferably the apparatus also comprises a magnetic separator to separate magnetic material from the waste material, preferably the magnetic separator is placed before the granulator a). The magnetic separator will remove magnetic material such as iron or the like.

To obtain a good wetting and mixing of the process-water and the granulated waste material it is preferred that the mixer is a screw-mixer. A screw-mixer allows the process-water to wet the material to be separated.

In a preferred embodiment of the apparatus according to the invention, the shaking table comprises one or more decks, preferably 2-5 decks. By using a shaking table having a number of decks placed vertically above each other it is possible to obtain good separating properties with a minimum of space required.

Preferably, the apparatus according to the invention comprises storage containers for a light plastic fraction, a metallic fraction and a heavy plastic fraction.

Moreover, the sink float units may also serve as storage and feeding tanks in the apparatus.

Furthermore, it is preferred that the apparatus according to the invention comprises a well to collect process-water from the first sink-float unit, the shaking table, optionally a second sink-float unit and storage containers. By collecting process-water it is possible to reuse this water.

Consequently it is preferred that the apparatus comprises pumps to re-circulate the process-water to the mixer.

Moreover, it is preferred that the apparatus comprises one or more filters to clean the re-circulated process-water.

In one embodiment of the apparatus according to the invention, the sink and float units are combined storage/feeding tanks and sink float cells. The sink float units are capable of storing the treated material and feeding it to the next part in the apparatus (and next step in the method).

The combined storage/feeding tanks and sink flow cells have a preferred volume corresponding to about 50 to 150 litres per 100 to 200 kg/hour of waste material.

The invention also relates to the use of the method according to the invention for separating waste material comprising metallic and plastic material.

Furthermore, the invention relates to the use of the apparatus according to the invention for separating waste material comprising metallic and plastic material.

The invention will now be described in further detail with reference to some examples and a drawing in which
Figure 1 shows a schematic flow sheet of the streams in examples 1 to 5,
Figure 2 shows a schematic diagram of the method and apparatus according to the invention, and
Figure 3 shows a deck on the shaking table.

### Example 1

Waste of plastic material from a fluid bed separation plant for separating cable waste was led to the apparatus according to the invention. The plastic waste was denoted PVC-Al, meaning that the waste was homogeneous PVC-aluminium cable waste. 647 kg of waste material was led to the apparatus. 0.1% by weight of detergent (SELLCLEANER SM-41 marketed by Henkel Kemi) was added to the process-water. The average size of the granules was 6-10 mm. The capacity of the separation process was measured to 212 kg/h. The specific energy consumption was measured to 7.4 kwh/ton.

**Table 1**

| Fraction | 1 | 2 | 3 | 4 | 5 | 6 |
|---|---|---|---|---|---|---|
| PVC-Al | 647 kg | 41 kg | 0 kg | 593 kg | 84.8 kg | 10.3 kg |

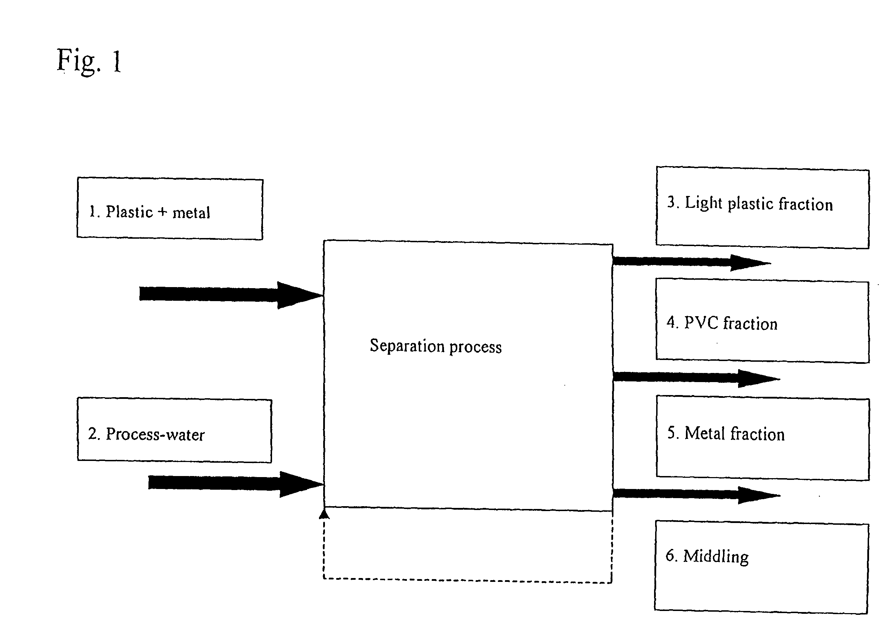

The fractions in table 1 are corresponding with the fractions in figure 1.

There was visible aluminium in the waste material (1). There was no visible aluminium in the PVC stream (4) after separation. There was no light plastic in the material. It is noticed that there was extracted 19.1% aluminium from the waste material. About 6% of water was added to the material, which was reduced to 3-4% by draining over time in the container. Stream (6) appears at the end of every run and was re-circulated.

### Example 2

Waste of plastic material from a fluid-bed separation plant was led to an apparatus according to the invention. The waste was denoted PVC-Cu, which derived from worked up homogeneous PVC cable waste. 600 kg of the waste was led to the apparatus. Detergent (SELLCLEANER SM-41 marketed by Henkel Kemi) was added to the process-water in an amount of 0.1%. The average mean size of the granules was 3-5 mm. The capacity of the separation process was about 185 kg/h. The specific energy consumption was measured to 8.2 kwh/ton.

**Table 2**

| Fraction | 1 | 2 | 3 | 4 | 5 | 6 |
|---|---|---|---|---|---|---|
| PVC-Cu | 600 kg | 60 kg | 0 kg | 602 kg | 46.0 kg | 12.0 kg |

The fractions in table 2 are corresponding with the fractions in figure 1.

Copper was visible in the waste material. After the separation there was no visible copper in the PVC-fraction (4). 7.7% of copper was extracted from the waste material. The waste material was mixed with about 10% of water which during time in a container was reduced to about 4-5%. Fraction (6) was returned to the process.

### Example 3

Mixed German PVC waste from a waste collecting arrangement was separated by use of the method according to the invention. 120 kg of a mixture of waste was introduced. 0.1% detergent (SELLCLEANER SM-41 marketed by Henkel Kemi) was added to the process-water. The average size of the granules was 3-10 mm. The capacity of the process was measured to about 120 kg/h. The specific energy consumption was measured to about 12 kwh/ton.

**Table 3**

| Fraction | 1 | 2 | 3 | 4 | 5 | 6 |
|---|---|---|---|---|---|---|
| PVC mix | 120 kg | 5 kg | 12.5 kg | 108 kg | 2.0 kg | 3.0 kg |

The fractions in table 3 are corresponding with the fractions in figure 1.

There was visible copper in the waste (1). No copper was visible in the PVC fraction (4). About 2% metal was extracted from the waste (in particularly copper and aluminium) and about 10% light plastic material was found in the waste material.

### Example 4

Mixed plastic waste from a Danish collecting arrangement (RGS90) with PVC and other types of plastic was subjected to the separation process according to the invention. The mixed waste included PE, PP, PVC, metal, sand and dirt. The waste comprised outworn tubes, boards and profiles of different types, but without plastisized PVC. About 837 kg of the mixed plastic waste was divided in a shredder and a granulator before it was subjected to the method according to the invention.

**Table 4**

| Fraction | 1 | 2 | 3 | 4 | 5 | 6 |
|---|---|---|---|---|---|---|
| Mixed PVC | 837 kg | 50 kg | 684 kg | 164 kg | 22.0 kg | 21.6 kg |

The fractions in table 4 are corresponding with the fractions in figure 1.

As seen from the table there was more light plastic (PE and PP) in the waste than PVC. The fraction of light plastic constituted 77%, metal and dirt constituted about 3% and PVC about 20% of the waste mixture. The water content was about 6% after separation, which during time in a container was drained down to 4-5% water. The specific energy consumption was measured to 13 kWh/ton.

### Example 5

Waste plastic material from a fluid bed separation plant was subjected to the method according to the invention. The waste material included PE, PVC, Al, Cu an originated from mixed PE-PVC-Aluminium-Copper cable waste. About 4930 kg waste was subjected to the method according to the invention. 0.1% detergents (SELLCLEANER SM-41 marketed by Henkel Kemi) were added to the process-water. The average size of the granules was between 5-10 mm. The capacity of the process was measured to about 95 kg/h. The specific energy consumption was measured to 23 kWh/ton.

**Table 5**

| Fraction | 1 | 2 | 3 | 4 | 5 | 6 |
|---|---|---|---|---|---|---|
| PE-PVC-Al-Cu | 4930 kg | 349 kg | 2531 kg | 2326 kg | 317 kg | 5.0 kg |

The fractions in table 5 are corresponding with the fractions in figure 1.

There was visible aluminium and cupper in the waste material (1). No cupper was visible in the PVC fraction (4) after separation (Cu<0.1%). About 6.5% aluminium (5) and about 5-10% cupper content was extracted from the waste material. As seen from table 5 about 5% of water was added to the material. By standing in a container the water content was reduced to about 3-4%.

The metal content and the chlorine content of the light plastics (3) were analysed by use of X-ray fluorescence XRF and the result of the analysis is shown in table 6.

A sample of the light plastic fraction 3 was milled to have a grain size below 0.5 mm. The milled grains were mixed with cellulose, which served as binder and pressed to a tablet for analysis.

The tablet was subjected to a XRF/UQ3 semiquantitative analysis, the X-ray fluorescence analysis was performed using a Uniquant 3 program UQ3 and a Philips PW2400 X-Ray spectrometer

**Table 6**

| Z | *El* | *Light-plastic weight-%* | Z | *El* | *Light-plastic weight-%* | Z | *El* | *Light-plastic weight-%* |
|---|---|---|---|---|---|---|---|---|
| 6 | C | - | 29 | Cu | 0.003 | 51 | Sb | < |
| 7 | N | - | 30 | Zn | < 0.01 | 52 | Te | < |
| 8 | O | - | 31 | Ga | < | 53 | I | < |
| 9 | F | - | 32 | Ge | < | 55 | Cs | < 0.1 |
| 11 | Na | < 0.01 | 33 | As | < | 56 | Ba | < 0.1 |
| 12 | Mg | < 0.01 | 34 | Se | < | Sum | La..Lu | - |
| 13 | Al | 0.05 | 35 | Br | 0.001 | 72 | Hf | < |
| 14 | Si | 0.05 | 37 | Rb | < | 73 | Ta | < |
| 15 | P | < 0.001 | 38 | Sr | 0.001 | 74 | W | < |
| 16 | S | 0.01 | 39 | Y | < | 75 | Re | < |
| 17 | Cl | 0.05 | 40 | Zr | < | 76 | Os | < |
| 19 | K | < | 41 | Nb | < | 77 | Ir | < |
| 20 | Ca | 0.1 | 42 | Mo | < | 78 | Pt | < |
| 22 | Ti | 0.002 | 44 | Ru | < | 79 | Au | < |
| 23 | V | < | 45 | Rh | < | 80 | Hg | < |
| 24 | Cr | 0.005 | 46 | Pd | < | 81 | Tl | < |
| 25 | Mn | < | 47 | Ag | < | 82 | Pb | 0.004 |
| 26 | Fe | 0.02 | 48 | Cd | < | 83 | Bi | < |
| 27 | Co | < | 49 | In | < | 90 | Th | < |
| 28 | Ni | < | 50 | Sn | < | 92 | U | < |

| | | | | | | | | |
|---|---|---|---|---|---|---|---|---|
| Z is the number of the element El in the periodic table. < ) indicates *element content* < *0.001%* < x )indicates content less than *2 standard deviations calculated by UQ3.* - ) indicates *element has not been analysed for.* | | | | | | | | |

The above reported elements were analyzed and calculated by UQ3 and the appearance of the reported elements was qualitatively verified.

The results in table 6 show that the light plastic fraction substantially is free of both PVC and metal.

### Example 6

Mixed plastic waste from a Danish collecting arrangement for PVC waste was subjected to the method according to the invention. The waste consisted essentially of PVC, metal, sand and dirt. The waste was in form of outworn tubes, roofing plates and profiles of different kinds without softened PVC. About 956 kg mixed waste was divided in a shredder and a granulator and led to the separation process. 0.1% of detergent (SELLCLEANER SM-41 marketed by Henkel Kemi) was added to the process-water. The average size of the granules was 6-8 mm.

**Table 7**

| Fraction | 1 | 2 | 3 | 4 | 5 | 6 |
|---|---|---|---|---|---|---|
| PVC-metal | 956 kg | 1.5 kg | 9 kg | 934 kg | 6.4 kg | 15.8 kg |

The fractions in table 7 are corresponding with the fractions in figure 1.

It is clearly seen from table 7 that almost pure PVC was collected. The fraction of light plastic is about 0.9%, the metal fraction is about 0.7% and PVC>97% of the waste material. The water content was about 5% after separation, which by standing in a container was reduced to about 1-2% after two days. The specific energy consumption was measured to 13 kWh/ton.

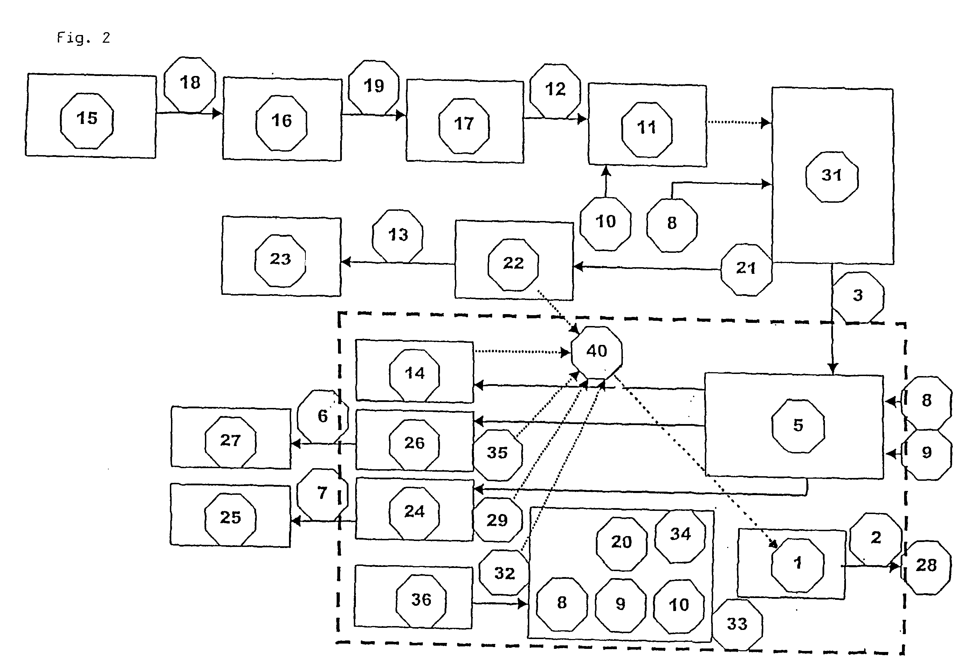

Figure 2 shows the method and apparatus according to the invention in a schematic way in order to illustrate one embodiment of the invention. The material to be treated is optionally divided in a shredder 15 and further divided in a granulator. The magnetic material is removed by use of magnetic separator 19. The non-magnetic material is collected and stored in a container 17.

The container 17 is supplied with a conveyor to silo 12. At the bottom of silo 12 a conveyor 11 is placed and process-water 20 is applied from a pump 10.

The residence-time of the material in conveyor 11 and the dosage of process-water 20 can be varied in order to achieve the desired wetting of the material.

The conveyor 11 supplies the material below the surface of liquid in silo 31. Silo 31 is filled with process-water and supplied with an overflow 21 from where light plastic material is.removed.

Process-water is led to silo 31 from pump 8 in such a way that the surface of the liquid comprising light material makes a circular movement towards the overflow 21. At the bottom of silo 31 is placed a conveyer which brings the heavy material to shaking table 5. Silo 31 serves as a sink-float separator with a very small volume.

The process-water and light material which runs through the overflow 21 are led to a sieve 22. The sieve 22 is placed at the entrance of conveyor 13. The process-water passes through the sieve and to the pump well 40. The conveyer 13 transports light plastic to the light plastic silo 23. The light plastic silo is supplied with draining holes from which process-water is drained and returned to the pump well 40.

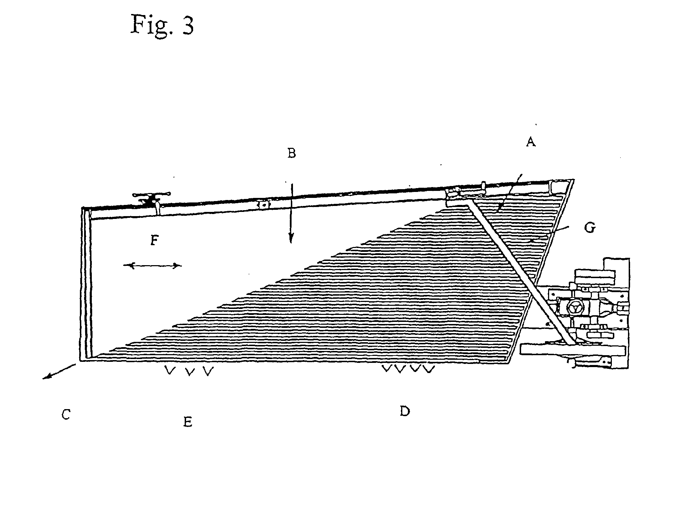

Conveyer 3 leads heavy material to shaking table 5 from silo 31. A deck of the shaking table is seen in figure 3. The heavy material is led to the shaking table at position A. Process-water is led to the shaking table at position B from pump 8 and 9. The amount and distribution of process-water on the shaking table can be varied. The heavy material is separated on the shaking table. Metals and process-water are taken out at the C side of the shaking table. The metal silo 14 is supplied with holes so that process-water can run out and be returned to the pump well 40. Plastic material and process-water are removed from the D side of the shaking table. The plastic material and process-water are led to feeding silo 24. In the bottom of feeding silo 24, a conveyor 7 is placed to transport heavy plastic material to silo 25. The conveyor 7 is designed so that process-water is returned to feeding silo 24. The process-water in feeding silo 24 is able to run through an overflow and back to the pump well 4.

Feeding silo 24 serves as a second sink-float separator with a very small volume.

An optional content of light plastic is collected in the pump well 40.

From the E side of the shaking table a minor amount of middling is removed. Middling is a non-separated mixture of plastic material and metal. The mixture is led to feeding silo 26. Feeding silo 26 is supplied with an overflow so that process-water can run to the pump well 40. In figure 3, the direction of strokes of the shaking table is indicated by F, and G is grooves in part of the deck. The grooves G facilitate the sorting or separation process.

In the bottom of feeding silo 26, a conveyor 6 is placed which transports the plastic-metal mixture to a silo 27. The conveyor 6 is designed in such a way that process-water is returned to the feeding silo 26. Hereby it is achieved that feeding silo 26 operates as a sink-flow separator with a very small volume. The silo 27 is supplied with holes which allow the process-water to run through silo 27 and back to the pump-well 4. The plastic-metal mixture in silo 27 is returned to feeding silo 17, feeding silo 12 or feeding silo 11, preferably feeding silo 12.

In the pump well 40 a pump 28 is installed which pumps contaminated process-water (with dust, light plastic etc.) to a vibrating sieve 1. Contaminated process-water is led to the top of the sieve and solid material is separated from the process-water and led to silo 28 via conveyor 2. Silo 28 is supplied with holes to allow process-water to run back to the pump well 40.

The cleaned process-water is led to the process-water storage tank 36. In the process-water storage tank 36 the pumps 8,9 and 10 are placed in such a way that they pump process-water from the surface in the storage tank 36. Fine particles are hereby allowed to settle in the process-water storage tank. The process-water storage tank 36 is supplied with a detergent in a concentration that allows the material in conveyor 11 to be wetted sufficiently for sink-float separations and separation on the shaking table.

Particles of dirt, sand and the like will substantially be collected in the pump well 40. The pump well is cleaned regularly. The process-water storage 30 is supplied with overflow 34 and means 20 for heating the process-water.

## Claims

1. A method for separating a waste material including plastic material and metallic material, which method comprises the steps of:
i) shredding and/or granulating the waste material including plastic and metallic material:
ii) mixing and wetting the granulated waste material with process-water;
iii) subjecting the granulated waste material to a sink-float process separating the mixture into two fractions having different average densities, the fraction with the lowest average density being designated the light fraction and the other fraction being designated the heavy fraction, removing the light fraction;
iv) subjecting the heavy fraction to treatment on a shaking table separating the heavy fraction into a metallic fraction and a heavy plastic fraction; and
v) optionally subjecting the heavy plastic fraction to a second sink-float process; **characterized in that** the sink-float process in step iii) is carried out in a sink-float unit which is filled with process-water and wherein the light fraction is removed from the upper part of the sink-float unit, and the heavy fraction sinks to the bottom part of the sink-float unit, and that the surface tension of the process-water is kept below 50 dyn/cm.

2. A method according to claim 1, wherein the mixture of wetted and granulated waste material and process-water from step ii) is supplied to the sink-float unit below the surface of liquid in the sink-float unit.

3. A method according to claim 1 or 2, wherein process-water is led to the sink-float unit from a pump.

4. A method according to claim 1 or 2, wherein the mixture from step ii) is fed into the sink-float unit under the process-water level making a circular movement.

5. A method according to claim 3, wherein the process-water is led to the sink-float unit in such a way that the surface of the liquid comprising light material makes a circular movement towards an overflow.

6. A method according to claim 1, wherein the surface tension of the process-liquid is kept below 45 dyn/cm.

7. A method according to claim 1, wherein the surface tension of the process-liquid is kept below 40 dyn/cm.

8. A method according to claim 1, wherein the surface tension of the process-liquid is kept below 35 dyn/cm.

9. A method according to claim 1, wherein the surface tension of the process-liquid is kept below 30 dyn/cm.

10. A method according to claim 1, wherein the surface tension of process-water has been regulated by addition of one or more surfactants/detergents.

11. A method according to claim 10, wherein the surface tension of process-water is regulated during the separation process by addition of additional surfactant/detergent.

12. A method according to claim 1, wherein the waste material is subjected to a dividing and/or screening process prior to step ii).

13. A method according to claim 1, wherein at least 80% by weight of the granulates of the granulated waste material has an average mean size between 2-14 mm measured by sieving.

14. A method according to claim 1, wherein the method comprises a further step of subjecting the waste material to a magnetic separation, said step preferably being performed prior to step ii).

15. A method according to claim 1, wherein the amount of process-water in step ii) is between 1 and 100 litres per kg waste material.

16. A method according to claim 1, wherein the amount of process-water in step iii) is between 1 and 100 litres per kg heavy fraction.

17. A method according to claim 1, wherein the amount of process-water in step iv) is between 1 and 100 litres per kg plastic fraction.

18. A method according to claim 1, wherein the process-water is collected from one or more, preferably all of the steps iii) - v) and re-circulated to step ii), preferably after being filtrated.

19. A method according to claim 10, wherein detergent is added to the process-water in an amount of 0.001-10 gram per kg granulated waste material.

20. A method according to claim 1, wherein the process-water has a temperature within the range of 10-90°C.

21. A method according to claim 1, wherein the time for mixing and wetting of the granulated waste material and the process-water in step ii) is from 10 to 1000 seconds.

22. A method according to claim 1, wherein the light fraction of step iii) comprises polyethylene, polypropylene and other polymer compounds, preferably the specific gravity of the polymer compound is less than 1 g/cm³.

23. A method according to claim 1, wherein the metallic fraction of step iv) comprises copper, aluminium, brass, steel, lead etc.

24. A method according to claim 1, wherein the plastic fraction of step iv) comprises polyvinyl chloride, polyvinyliden chloride, polyvinyliden fluoride, chlorinated rubber, tetra-flourcarbon (e.g. Teflon) and other polymer compounds, preferably the specific gravity of the polymer compound is higher than 1,0 g/cm³.

25. A method according to claim 1, wherein the frequency of the strokes of the shaking table in step iv) is 1-10 strokes per second.

26. An apparatus for separating waste material including plastic material and metallic material, which apparatus comprises:
a) a shredder (15) and/or a granulator for granulating the waste material
b) a mixer (11) for mixing the granulated waste material with process-water,
c) a first sink-float unit (31) for separating the granulated waste material into a light and a heavy fraction,
d) a shaking table (5) for separating the heavy fraction into a metallic fraction and a plastic fraction,
e) optionally a second sink-float unit (24) for separating the plastic fraction,
**characterized in that** the first sink-float unit (31) has an overflow for the light fraction in the upper part of the sink-float unit and a means (3) for removing the heavy fraction at the bottom part of the sink-float unit and **in that** the apparatus further comprises a means for controlling the surface tension of the process-water to below 50 dyn/cm.

27. An apparatus according to claim 26, wherein the mixer for mixing the granulated waste material with process-water is a pipe leading to the sink-float unit.

28. An apparatus according to claim 27, wherein the pipe is provided to feed the wetted waste material to the sink-float unit under a process-water level.

29. An apparatus according to claim 26, including a pump (8) leading process-water into the sink-float unit.

30. An apparatus according to claim 26, including a means for feeding the mixture of wetted and granulated waste material and process-water into the sink-float unit so that a circular movement is made.

31. An apparatus according to claim 29, the pump leads the process-water into the sink-float unit in such a way that the surface of the liquid comprising light material makes a circular movement towards an overflow.

32. An apparatus according to claim 26, wherein the means for controlling the surface tension of process-water used in step ii) is a means for addition of one or more surfactants/detergents.

33. An apparatus according to claim 32, further comprising a means for controlling the surface tension of process-water during the separation process by addition of additional surfactant/detergent.

34. An apparatus according to claim 26, which further comprises a dividing and screening unit to divide and screen the waste material, preferably the dividing and screening unit is placed before the granulator a).

35. An apparatus according to claim 26, which further comprises a magnetic separator to separate magnetic material from the waste material, preferably the magnetic separator is placed before the granulator a).

36. An apparatus according to claim 26, wherein the mixer is a screw-mixer.

37. An apparatus according to claim 26, wherein the shaking table (5) comprises one or more decks.

38. An apparatus according to claim 26, comprising storage containers for a light fraction (27), a metallic fraction (14) and a heavy plastic fraction (25).

39. An apparatus according to claim 26, comprising a well (40) to collect process-water from the first sink-float unit, the shaking table, optionally a second sink-float unit and storage containers.

40. An apparatus according to claim 26, comprising pumps to re-circulate the process-water to the mixer.

41. An apparatus according to claim 40, comprising one or more filters to clean the re-circulated process-water.

42. An apparatus according to claim 26, wherein the sink float units serve as storing and feeding tanks.

43. Use of the method according to claims 1-25 for separating waste material comprising metallic and plastic material.

44. Use of the apparatus according to claims 26-42 for separating waste material comprising metallic and plastic material,

## Patentansprüche

1. Verfahren zum Trennen eines Abfallstoffs, umfassend Kunststoffmaterial und Metallmaterial, welches Verfahren die Schritte umfasst:
i) Schreddern und/oder Granulieren des Abfallstoffs, umfassend Kunststoff- und Metallmaterial;
ii) Mischen und Benetzen des granulierten Abfallstoffs mit Prozesswasser;
iii) Unterziehen des granulierten Abfallstoffs einem Schwimm-Sink-Verfahren, das die Mischung in zwei Fraktionen mit unterschiedlichen durchschnittlichen Dichten trennt, wobei die Fraktion mit der niedrigsten durchschnittlichen Dichte als die leichte Fraktion bezeichnet wird und die andere Fraktion als die schwere Fraktion bezeichnet wird, Entfernen der leichten Fraktion;
iv) Unterziehen der schweren Fraktion einer Behandlung auf einem Rütteltisch, der die schwere Fraktion in eine Metallfraktion und eine schwere Kunststofffraktion trennt; und
v) fakultativens Unterziehen der schweren Kunststofffsaktion einem zweiten Schwimm-Sink-Verfahren; **dadurch gekennzeichnet, dass** das Schwimm-Sink-Verfahren in Schritt iii) in einer Schwimm-Sink-Einheit durchgeführt wird, die mit Prozesswasser gefüllt ist, und wobei die leichte Fraktion von dem oberen Teil der Schwimm-Sink-Einheit entfernt wird und die schwere Fraktion zum Bodenteil der Schwimm-Sink-Einheit sinkt, und dass die Oberflächenspannung des Prozesswassers unter 50 dyn/cm gehalten wird.

2. Verfahren nach Anspruch 1, bei dem die Mischung von benetztem und granuliertem Abfallstoff und Prozesswasser von Schritt ii) zu der Schwimm-Sink-Einheit unter der Oberfläche von Flüssigkeit in der Schwimm-Sink-Einheit zugeführt wird.

3. Verfahren nach Anspruch 1 oder 2, bei dem Prozesswasser von einer Pumpe zur Schwimm-Sink-Einheit geleitet wird.

4. Verfahren nach Anspruch 1 oder 2, bei dem die Mischung von Schritt ii) in die Schwimm-Sink-Einheit unter dem Prozesswasserspiegel eingespeist wird, wobei eine kreisförmige Bewegung gemacht wird.

5. Verfahren nach Anspruch 3, bei dem das Prozesswasser zu der Schwimm-Sink-Einheit auf eine solche Weise geleitet wird, dass die Oberfläche der Flüssigkeit, die leichtes Material umfasst, eine kreisförmige Bewegung in Richtung auf einen Überlauf macht.

6. Verfahren nach Anspruch 1, bei dem die Oberflächenspannung der Prozessflüssigkeit unter 45 dyn/cm gehalten wird.

7. Verfahren nach Anspruch 1, bei dem die Oberflächenspannung der Prozessflüssigkeit unter 40 dyn/cm gehalten wird.

8. Verfahren nach Anspruch 1, bei dem die Oberflächenspannung der Prozessflüssigkeit unter 35 dyn/cm gehalten wird.

9. Verfahren nach Anspruch 1, bei dem die Oberflächenspannung der Prozessflüssigkeit unter 30 dyn/cm gehalten wird.

10. Verfahren nach Anspruch 1, bei dem die Oberflächenspannung von Prozesswasser durch Zugabe von einem oder mehreren Tensiden/Detergentia geregelt worden ist.

11. Verfahren nach Anspruch 10, bei dem die Oberflächenspannung von Prozesswasser während des Trennprozesses durch Zugabe von zusätzlichem Tensid/Detergent geregelt wird.

12. Verfahren nach Anspruch 1, bei dem der Abfallstoff vor Schritt ii) einem Teil- und/oder Klassierprozess unterzogen wird.

13. Verfahren nach Anspruch 1, bei dem mindestens 80 Gew.-% der Granulate des granulierten Abfallstoffs eine durchschnittliche mittlere Größe zwischen 2-14 mm, gemessen durch Sieben, aufweist.

14. Verfahren nach Anspruch 1, wobei das Verfahren einen weiteren Schritt eines Unterziehens des Abfallstoffs einer magnetischen Trennung umfasst, wobei der Schritt vorzugsweise vor Schritt ii) ausgeführt wird.

15. Verfahren nach Anspruch 1, bei dem die Menge von Prozesswasser in Schritt ii) zwischen 1 und 100 Litern pro kg Abfallstoff liegt.

16. Verfahren nach Anspruch 1, bei dem die Menge von Prozesswasser in Schritt iii) zwischen 1 und 100 Litern pro kg schwere Fraktion liegt.

17. Verfahren nach Anspruch 1, bei dem die Menge von Prozesswasser in Schritt iv) zwischen 1 und 100 Litern pro kg Kunststofffraktion liegt.

18. Verfahren nach Anspruch 1, bei dem das Prozesswasser von einem oder mehreren, vorzugsweise sämtlichen Schritten iii)-v) gesammelt und zum Schritt ii) rezirkuliert wird, vorzugsweise nachdem es filtriert ist.

19. Verfahren nach Anspruch 10, bei dem Detergent zum Prozesswasser in einer Menge von 0,001-10 Gramm pro kg granuliertem Abfallstoff hinzugefügt wird.

20. Verfahren nach Anspruch 1, bei dem das Prozesswasser eine Temperatur im Bereich von 10-90°C aufweist.

21. Verfahren nach Anspruch 1, bei dem die Zeit zum Mischen und Benetzen des granulierten Abfallstoffs und des Prozesswassers in Schritt ii) von 1.0 bis 1000 Sekunden beträgt.

22. Verfahren nach Anspruch 1, bei dem die leichte Fraktion von Schritt iii) Polyethylen, Polypropylen und andere Polymerzusammensetzungen umfasst, vorzugsweise die relative Dichte der Polymerzusammensetzung kleiner als 1 g/cm³ ist.

23. Verfahren nach Anspruch 1, bei dem die Metallfraktion von Schritt iv) Kupfer, Aluminium, Messing, Stahl, Blei usw. umfasst.

24. Verfahren nach Anspruch 1, bei dem die Kunststofffraktion von Schritt iv) Polyvinylchlorid, Polyvinylidenchlorid, Polyvinylidenfluorid, Chlorkautschuk, Tetrafluorkohlenstoff (z,B. Teflon) und andere Polymerzusammensetzungen umfasst, vorzugsweise die relative Dichte der Polymerzusammensetzung höher als 1,0 g/cm³ ist.

25. Verfahren nach Anspruch 1, bei dem die Frequenz der Stöße des Rütteltischs in Schritt iv) 1-10 Stöße pro Sekunde ist.

26. Vorrichtung zum Trennen von Abfallstoff, umfassend Kunststoffmaterial und Metallmaterial, welche Vorrichtung umfasst:
a) einen Schredder (15) und/oder einen Granulator zum Granulieren des Abfallstoffs,
b) einen Mischer (11) zum Mischen des granulierten Abfallstoffs mit Prozesswasser,
c) eine erste Schwimm-Sink-Einheit (31) zum Trennen des granulierten Abfallstoffs in eine leichte und eine schwere Fraktion,
d) einen Rütteltisch (5) zum Trennen der schweren Fraktion in eine Metallfraktion und eine Kunststofffraktion,
e) fakultativ eine zweite Schwimm-Sink-Einheit (24) zum Trennen der Kunststofffraktion,
**dadurch gekennzeichnet, dass** die erste Schwimm-Sink-Einheit (31) einen Überlauf für die leichte Fraktion im oberen Teil der Schwimm-Sink-Einheit und eine Einrichtung (3) zur Entfernung der schweren Fraktion am Bodenteil der Schwimm-Sink-Einheit aufweist und dadurch dass die Vorrichtung weiter eine Einrichtung zum Steuern der Oberflächenspannung des Prozesswassers auf unter 50 dyn/cm umfasst.

27. Vorrichtung nach Anspruch 26, bei der der Mischer zum Mischen des granulierten Abfallstoffs mit Prozesswasser ein Rohr ist, das zu der Schwimm-Sink-Einheit führt.

28. Vorrichtung nach Anspruch 27, bei der das Rohr bereitgestellt wird, um den benetzten Abfallstoff zur Schwimm-Sink-Einheit unter einem Prozesswasserspiegel einzuspeisen.

29. Vorrichtung nach Anspruch 26, umfassend eine Pumpe (8), die Prozesswasser in die Schwimm-Sink-Einheit leitet.

30. Vorrichtung nach Anspruch 26, umfassend eine Einrichtung zum Einspeisen der Mischung von benetztem und granuliertem Abfallstoff und Prozesswasser in die Schiwimm-Sink-Einheit, so dass eine kreisförmige Bewegung gemacht wird.

31. Vorrichtung nach Anspruch 29, bei der die Pumpe das Prozesswasser in die Schwimm-Sink-Einheit auf eine solche Weise dass die Oberfläche der Flüssigkeit, die leichtes Material umfasst, eine kreisförmige Bewegung in Richtung auf einen Überlauf macht.

32. Vorrichtung nach Anspruch 26, bei der die Einrichtung zum Steuern der Oberflächenspannung von Prozesswasser, das in Schritt ii) verwendet wird, eine Einrichtung zur Zugabe von einem oder mehreren Tensiden/Detergentia ist.

33. Vorrichtung nach Anspruch 32, weiter umfassend eine Einrichtung zum Steuern der Oberflächenspannung von Prozesswasser während des Trennprozesses durch Zugabe von zusätzlichem Tensid/Detergent.

34. Vorrichtung nach Anspruch 26, die weiter eine Teil- und Klassiereinheit umfasst, um den Abfallstoff zu teilen und zu klassieren, wobei vorzugsweise die Teil- und Klassiereinheit vor dem Granulator a) platziert ist.

35. Vorrichtung nach Anspruch 26, die weiter einen Magnetscheider umfasst, um magnetisches Material vom Abfallstoff zu trennen, wobei vorzugsweise der Magnetscheider vor dem Granulator a) platziert ist.

36. Vorrichtung nach Anspruch 26, bei der der Mischer ein Schneckenmischer ist.

37. Vorrichtung nach Anspruch 26, bei der der Rütteltisch (5) einen oder mehrere Decks umfasst.

38. Vorrichtung nach Anspruch 26, umfassend Speicherbehälter für eine leichte Fraktion (27), eine Metallfraktion (14) und eine schwere Kunststofffraktion (25).

39. Vorrichtung nach Anspruch 26, umfassend eine Wanne (40) zum Sammeln von Prozesswasser von der ersten Schwimm-Sink-Einheit, den Rütteltisch, fakultativ eine zweite Schwimm-Sink-Einheit und Speicherbehälter.

40. Vorrichtung nach Anspruch 26, umfassend Pumpen, um das Prozesswasser zum Mischer zu rezirkulieren.

41. Vorrichtung nach Anspruch 40, umfassend einen oder mehrere Filter, um das rezirkulierte Prozesswasser zu reinigen.

42. Vorrichtung nach Anspruch 26, bei der die Schwimm-Sink-Einheiten als Speicher- und Speise tanks dienen.

43. Verwendung des Verfahrens nach den Ansprüchen 1-25 zum Trennen von Abfallstoff, umfassend Metall- und Kunststoffmaterial.

44. Verwendung der Vorrichtung nach den Ansprüchen 26-42 zum Trennen von Abfallstoff, umfassend Metall- und Kunststoffmaterial.

## Revendications

1. Procédé de séparation d'un déchet comprenant une matière plastique et une matière métallique, lequel procédé comprend les étapes consistant à :
i) déchiqueter et/ou granuler le déchet incluant la matière plastique et métallique ;
ii) mélanger et mouiller le déchet granulé avec de l'eau de traitement ;
iii) soumettre le déchet granulé à un procédé de plongée-flottaison séparant le mélange en deux fractions ayant des densités moyennes différentes, la fraction avec la densité moyenne la plus basse étant désignée comme la fraction légère et l'autre fraction étant désignée comme la fraction lourde, retirer la fraction légère ;
iv) soumettre la fraction lourde à un traitement sur une table à secousses séparant la fraction lourde en une fraction métallique et une fraction plastique lourde ; et
v) soumettre facultativement la fraction plastique lourde à un second procédé de plongée-flottaison, **caractérisé en ce que** le procédé de plongée-flottaison dans l'étape iii) est réalisé dans une unité de plongée-flottaison qui est remplie de l'eau de traitement et dans laquelle la fraction légère est retirée de la partie supérieure de l'unité de plongée-flottaison, et la fraction lourde plonge vers la partie inférieure de l'unité de plongée-flottaison, et **en ce que** la tension de surface de l'eau de traitement est maintenue en dessous de 50 dyn/cm.

2. Procédé selon la revendication 1, dans lequel le mélange de déchet mouillé et granulé et de l'eau de traitement provenant de l'étape ii) est fourni à l'unité de plongée-flottaison en dessous de la surface du liquide dans l'unité de plongée-flottaison.

3. Procédé selon la revendication 1 ou 2, dans lequel l'eau de traitement est amenée vers l'unité de plongée-flottaison à partir d'une pompe.

4. Procédé selon la revendication 1 ou 2, dans lequel le mélange provenant de l'étape ii) est amené dans l'unité de plongée-flottaison sous le niveau de l'eau de traitement en effectuant un mouvement circulaire.

5. Procédé selon la revendication 3, dans lequel l'eau de traitement est amenée vers l'unité de plongée-flottaison de telle manière que la surface du liquide comprenant la matière légère effectue un mouvement circulaire vers un débordement.

6. Procédé selon la revendication 1, dans lequel la tension de surface du liquide de traitement est maintenue en dessous de 45 dyn/cm.

7. Procédé selon la revendication 1, dans lequel la tension de surface du liquide de traitement est maintenue en dessous de 40 dyn/cm.

8. Procédé selon la revendication 1, dans lequel la tension de surface du liquide de traitement est maintenue en dessous de 35 dyn/cm.

9. Procédé selon la revendication 1, dans lequel la tension de surface du liquide de traitement est maintenue en dessous de 30 dyn/cm.

10. Procédé selon la revendication 1, dans lequel la tension de surface de l'eau de traitement a été régulée par addition d'un ou plusieurs agents tensioactifs/détergents

11. Procédé selon la revendication 10, dans lequel la tension de surface de l'eau de traitement est régulée durant le procédé de séparation par addition d'un agent tensioactif/détergent additionnel.

12. Procédé selon la revendication 1, dans lequel le déchet est soumis à un processus de division et/ou de tamisage avant l'étape ii).

13. Procédé selon la revendication 1, dans lequel au moins 80 % en poids des granulats du déchet granulé a une taille médiane moyenne entre 2 et 14 mm mesurée par tamisage.

14. Procédé selon la revendication 1, dans lequel le procédé comprend une étape supplémentaire consistant à soumettre le déchet à une séparation magnétique, ladite étape étant de préférence réalisée avant l'étape ii).

15. Procédé selon la revendication 1, dans lequel la quantité d'eau de traitement dans l'étape ii) est entre 1 et 100 litres par kg de déchet.

16. Procédé selon la revendication 1, dans lequel la quantité d'eau de traitement dans l'étape iii) est entre 1 et 100 litres par kg de fraction lourde.

17. Procédé selon la revendication 1, dans lequel la quantité d'eau de traitement dans l'étape iv) est entre 1 et 100 litres par kg de fraction plastique.

18. Procédé selon la revendication 1, dans lequel l'eau de traitement est collectée à partir d'une ou plusieurs, de préférence toutes, les étapes iii) à v) et remise en circulation vers l'étape ii), avant d'être filtrée.

19. Procédé selon la revendication 10, dans lequel un détergent est ajouté à l'eau de traitement en une quantité de 0,001 à 10 grammes par kg de déchet granulé.

20. Procédé selon la revendication 1, dans lequel l'eau de traitement a une température dans la gamme de 10 à 90°C.

21. Procédé selon la revendication 1, dans lequel le temps de mélange et de mouillage du déchet granulé et de l'eau de traitement dans l'étape ii) est de 10 à 1 000 secondes.

22. Procédé selon la revendication 1, dans lequel la fraction légère de l'étape iii) comprend du poly(éthylène), du poly(propylène) et d'autres composés polymères, de préférence, la masse volumique spécifique du composé polymère est inférieure à 1 g/cm³.

23. Procédé selon la revendication 1, dans lequel la fraction métallique de l'étape iv) comprend du cuivre, de l'aluminium, du laiton, de l'acier, du plomb, etc.

24. Procédé selon la revendication 1, dans lequel la fraction plastique de l'étape iv) comprend du poly(chlorure de vinyle), du poly(chlorure de vinylidène), du poly(fluorure de vinylidéne), du caoutchouc chloré, du tétrafluorocarbone (par exemple du téflon) et d'autres composés polymères, de préférence la masse volumique spécifique du composé polymère est supérieure à 1,0 g/cm³.

25. Procédé selon la revendication 1, dans lequel la fréquence des coups de la table à secousses dans l'étape iv) est de 1 à 10 coups par seconde.

26. Appareil de séparation de déchet comprenant une matière plastique et une matière métallique, lequel appareil comprend :
a) une déchiqueteuse (15) et/ou un granulateur pour granuler le déchet,
b) un mélangeur (11) pour mélanger le déchet granulé avec de l'eau de traitement,
c) une première unité de plongée-flottaison (31) pour séparer le déchet granulé en une fraction légère et une fraction lourde,
d) une table à secousses (5) pour séparer la fraction lourde en une fraction métallique et une fraction plastique,
e) facultativement une seconde unité de plongée-flottaison (24) pour séparer la fraction plastique,
**caractérisé en ce que** la première unité de plongée-flottaison (31) a un débordement pour la fraction légère dans la partie supérieure de l'unité de plongée-flottaison et un moyen (3) pour retirer la fraction lourde au niveau de la partie inférieure de l'unité de plongée-flottaison, et **en ce que** l'appareil comprend en outre un moyen pour réguler la tension de surface de l'eau de traitement en dessous de 50 dyn/cm.

27. Appareil selon la revendication 26, dans lequel le mélangeur pour mélanger le déchet granulé avec de l'eau de traitement est un tuyau menant vers l'unité de plongée-flottaison.

28. Appareil selon la revendication 27, dans lequel le tuyau est prévu pour amener le déchet mouillé vers l'unité de plongée-flottaison sous un niveau de l'eau de traitement.

29. Appareil selon la revendication 26, comprenant une pompe (8) amenant l'eau de traitement dans l'unité de plongée-flottaison.

30. Appareil selon la revendication 26, comprenant un moyen pour amener le mélange de déchet mouillé et granulé et de l'eau de traitement dans l'unité de plongée-flottaison de sorte qu'un mouvement circulaire soit effectué.

31. Appareil selon la revendication 29, dans lequel la pompe amène l'eau de traitement dans l'unité de plongée-flottaison de telle manière que la surface du liquide comprenant la matière légère effectue un mouvement circulaire vers le débordement.

32. Appareil selon la revendication 26, dans lequel le moyen pour réguler la tension de surface de l'eau de traitement utilisé dans l'étape ii) est un moyen pour ajouter un ou plusieurs agents tensioactifs/détergents.

33. Appareil selon la revendication 32, comprenant en outre un moyen pour réguler la tension de surface de l'eau de traitement pendant le procédé de séparation par addition d'un agent tensioactif/détergent additionnel.

34. Appareil selon la revendication 26, qui comprend en outre une unité de division et de tamisage pour diviser et tamiser le déchet, de préférence l'unité de division et de tamisage est placée avant le granulateur a).

35. Appareil selon la revendication 26, qui comprend en outre un séparateur magnétique pour séparer la matière magnétique du déchet, de préférence le séparateur magnétique est placé avant le granulateur a).

36. Appareil selon la revendication 26, dans lequel le mélangeur est un mélangeur à vis.

37. Appareil selon la revendication 26, dans lequel la table à secousses (5) comprend un ou plusieurs tabliers.

38. Appareil selon la revendication 26, comprenant des conteneurs de stockage pour une fraction légère (27), une fraction métallique (14) et une fraction plastique lourde (25).

39. Appareil selon la revendication 26, comprenant un puits (40) pour collecter l'eau de traitement provenant de la première unité de plongée-flottaison, la table à secousses, facultativement, une seconde unité de plongée-flottaison et des conteneurs de stockage.

40. Appareil selon la revendication 26, comprenant des pompes pour remettre à circuler l'eau de traitement vers le mélangeur.

41. Appareil selon la revendication 40, comprenant un ou plusieurs filtres pour nettoyer l'eau de traitement remise à circuler.

42. Appareil selon la revendication 26, dans lequel les unités de plongée-flottaison servent de réserves de stockage et d'alimentation.

43. Utilisation du procédé selon les revendications 1 à 25, pour séparer un déchet comprenant une matière métallique et une matière plastique.

44. Utilisation de l'appareil selon les revendications 26 à 42, pour séparer un déchet comprenant une matière métallique et une matière plastique.
